# EUROPEAN PATENT SPECIFICATION

(11) **EP 0 548 424 B1**
(45) Date of publication and mention of the grant of the patent: **10.07.1996**
(21) Application number: 91312015.0
(22) Date of filing: 24.12.1991
(51) Int. Cl.: C04B 35/58, H01T 13/38

(54) **A sintered ceramic body and a method of making a spark plug insulator therefrom**
Gesinterter Keramikkörper und Verfahren zur Herstellung eines daraus hergestellten Zündkerzenisolators
Corps fritté en céramique et procédé de fabrication d'un isolateur de bougies à partir de celui-ci

(43) Date of publication of application: 30.06.1993
(73) Proprietor: NGK SPARK PLUG CO., LTD, Nagoya-shi (JP)
(72) Inventor: Sugimoto, Makoto, Mizuho-ku, Nagoya-shi (JP); Musasa, Mamoru, Mizuho-ku, Nagoya-shi (JP); Tanabe, Hiroyuki, Mizuho-ku, Nagoya-shi (JP); Konishi, Masahiro, Mizuho-ku, Nagoya-shi (JP)
(74) Representative: Cresswell, Thomas Anthony

(56) References cited:
- EP-A- 0 015 421
- EP-A- 0 480 768
- JOURNAL OF MATERIAL SCIENCE vol. 22, no. 11, November 1987, LONDON, GB pages 4056 - 4060; M. ZULFEQUAR ET AL: 'Electrical conductivity of hot-pressed AlN ceramic: effect of various oxide additives.'
- PATENT ABSTRACTS OF JAPAN vol. 15, no. 96 (C-812)7 March 1991 & JP-A-2307871
- CHEMICAL ABSTRACTS, vol. 82, no. 22, 2 June 1975, Columbus, Ohio, US; abstract no. 144186F, page 275 ;column R ; & JP-B-49 040123

## Description

This invention relates to a sintered ceramic body for a spark plug insulator which needs good insulation properties at high ambient temperature and good thermal conductivity.

In spark plug insulators for internal combustion engines, nitride-based sintered ceramic bodies have conventionally been used since these have good thermal conductivity.

The nitride-based sintered ceramic body, however, decreases its electrical insulation when exposed to high ambient temperature, and grows dendritic crystals treeing over the surface of the sintered ceramic body when high voltages are applied. This is due to Joule's heat caused from corona discharge creeping over the surface of the sintered ceramic body.

Therefore, it is an object of the invention to provide a sintered ceramic body for a spark plug insulator which is capable of maintaining good insulation at high temperature with good thermal conductivity.

EP-A-0 480 768 describes a sintered ceramic body used for a spark plug insulator, which comprises from 0.01 to 0.035 wt% of MgO diffused into a nitride-based ceramic body.

The present invention provides a sintered ceramic body obtainable by sintering a mixture comprising a nitride or oxinite-based ceramic powder having an average grain size of 1.5 µm and an oxygen-laden rate of less than 2 weight percent and magnesia (MgO) in an amount of 0.035 wt% to 5.0 wt%, excluding 0.035 wt%, based upon the weight of the mixture. Preferably, the amount of magnesia is from 0.05 to 5.0 wt%.

In one aspect of the invention the sintered ceramic body also comprises up to 10 weight percent, based on the weight of the mixture, of a sintering additive which is at least one compound selected from alkaline earth metals and rare-earth metals, the amount of the sintering additive being calculated on the basis of the alkaline earth metal oxide or rare earth metal oxide.

Examples of the sintering additive include yttrium oxide (Y₂O₃), calcium oxide (CaO), barium oxide (BaO), strontium oxide (SrO), scandium oxide (Sc₂O₃), europium oxide (Eu₂O₃) and lanthanum oxide (La₂O₃).

Addition of the magnesia (MgO) causes grain boundaries to form among crystal lattices during the process in which the ceramic body is sintered. This significantly contributes to elevating the electrical insulation of the ceramic body at high temperatures.

The sintered ceramic body of the invention may be produced by a process which comprises:
preparing a mixture of nitride-based ceramic powder, magnesia and, as sintering additive, at least one compound of an alkaline earth metal or rare-earth metal, the amount of magnesia being from 0.035 wt % to 5.0 wt %, excluding 0.035 wt %, and the amount of the sintering additive being up to 10 wt % calculated as alkaline earth metal oxide or rare-earth metal oxide, both based on the total weight of the mixture,
calcining the mixture at 500°C for about 2 hours;
pressing the mixture at 99.64 MPa (1.0 ton/cm²) by means of a cold isostatic press to form a compact body; and
sintering the compact body in a nitrogen atmosphere at a temperature of from 1750°C to 1900°C for 2 to 5 hours. This process is a further aspect of the invention.

The sintered ceramic body of the invention may be in the form of a spark plug insulator. Its elevated insulation helps to prevent corona discharge creeping over the surface of the sintered ceramic body, thus avoiding generation of Joule's heat to prevent growth of dendritic crystals treeing over the surface of the sintered ceramic body when high voltages are applied.

If very small amounts of magnesia are used in ceramic bodies, for instance less than 0.01 wt%, there is almost no increase in the electrical insulation of the ceramic body at high ambient temperatures. In contrast, if the amount of magnesia exceeds 5.0 wt% voids are induced in the ceramic body during sintering, thereby reducing the relative density of the ceramic body and causing it to absorb moisture.

The addition of a sintering additive in an amount of up to 10 weight percent improves the sintering properties of the sintered ceramic body. However, the use of more than 10 weight percent of the sintering additive can significantly impair the good thermal conductivity of the nitride-based ceramic body.

If no sintering additive is used, an increased amount of magnesia is required to ensure sufficient insulating properties of the sintered ceramic body.

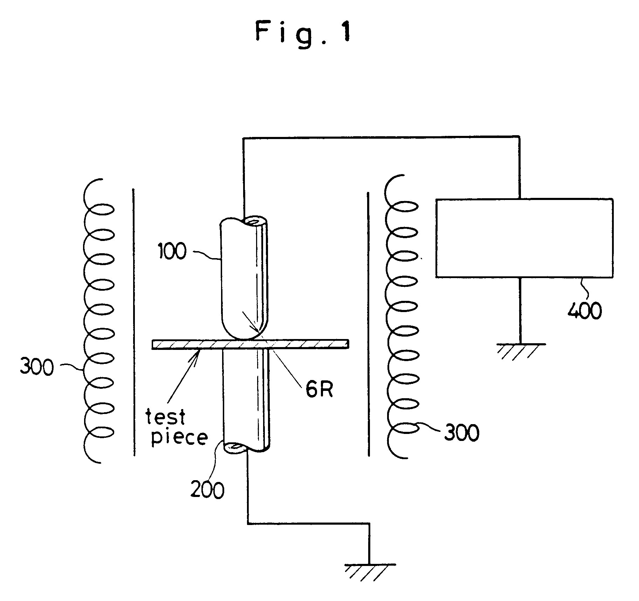

The invention will be further described in the following Example with reference to the accompanying drawing, in which Fig. 1 is a schematic plan view showing a device to measure the electrical insulation of various test pieces at high temperature.

### Example

Referring to Fig. 1 and the following Table 1, aluminum nitride (AlN) powder was prepared as a nitride-based ceramic, grain size of which measures 1.5 µm in average (sedimentation analysis) with an oxygen-laden rate as 1.0 weight percent. It was necessary to keep the oxygen-laden rate below 2.0 wt% in maintaining good sintering property and good thermal conductivity.

Each of sintering additives employed herein were 99.9 % purity selected from the group consisting of yttrium oxide (Y₂O₃), calcium oxide (CaO), barium oxide (BaO), strontium oxide (SrO), scandium oxide (SC₂O₃), europium oxide (Eu₂O₃) and lanthanum oxide (La₂O₃).

The test pieces (Nos. 1 ∼ 14) of the sintered ceramic body according to the invention were manufactured as follows:
(1) A mixture of the sintering additive (except for the case of Nos. 1 ∼ 2), aluminum nitrite (AlN) powder, magnesia (MgO) and ethanol were kneaded overnight according to Table 1.
(2) After desiccating the mixture to degrease it, the mixture was pressed within a metallic die to form a compact plate which measures 50 mm in diameter and 3 mm in thickness for the purpose of measuring its electrical insulation.
(3) The compact plate was calcined in an atmospheric environment at the temperature of about 500 °C for approximately 2 hours, and was pressed under the pressure of about 99.64 MPa (1.0 ton/cm²) by means of cold isostatic press (C.I.P.).
(4) Then, the compact plate was sintered at 1750 ∼ 1900 °C in a nitrogen atmosphere for 2 ∼ 5 hours as shown in Table 1.
(5) The compact plate was lapped to measure 40 mm in diameter and 1 mm in thickness.

According to Table 2, comparative test pieces (Nos. 15 ∼ 27) were substantially sintered in the same manner as described above.

**Table 1**

| test piece No. | weight percent of AlN (wt%) | sintering additive | weight percent of sintering additive (wt%) | weight percent of MgO (wt%) | sintering conditions (°C×Hrs) | relative density (%) | thermal conductivity (W/m·k) | electrical insulation at 700 °C (MΩ) |
|---|---|---|---|---|---|---|---|---|
| 1 | 97.00 | - | - | 3.00 | 1800×2 | 95.5 | 90 | 100 |
| 2 | 95.00 | - | - | 5.00 | 1850×5 | 96.5 | 76 | 150 |
| 3 | 97.50 | Y₂O₃ | 0.5 | 2.00 | 1900×2 | 98.0 | 96 | 180 |
| 4 | 96.50 | Y₂O₃ | 3.0 | 0.50 | 1900×2 | 99.0 | 160 | 600 |
| 5 | 89.00 | Y₂O₃ | 10.0 | 1.00 | 1700×2 | 99.5 | 105 | 300 |
| 6 | 96.75 | CaO | 3.0 | 0.25 | 1850×5 | 99.0 | 110 | 1500 |
| 7 | 94.95 | CaO | 5.0 | 0.05 | 1850×5 | 99.0 | 95 | 5000 |
| 8 | 95.50 | BaO | 3.0 | 1.50 | 1800×5 | 99.5 | 102 | 1000 |
| 9 | 97.20 | SrO | 2.0 | 0.80 | 1750×2 | 99.5 | 110 | 7500 |
| 10 | 93.50 | SrO | 4.0 | 2.50 | 1750×2 | 99.5 | 96 | 2500 |
| 11 | 87.50 | SrO | 8.0 | 4.50 | 1750×2 | 99.5 | 82 | 6000 |
| 12 | 95.80 | Sc₂O₃ | 3.0 | 1.20 | 1800×2 | 99.0 | 97 | 500 |
| 13 | 94.50 | Eu₂O₃ | 4.5 | 1.00 | 1800×2 | 98.5 | 127 | 150 |
| 14 | 91.00 | La₂O₃ | 8.0 | 1.00 | 1850×5 | 98.5 | 90 | 85 |

**Table 2**

| Comparative test piece No. | weight percent of AlN (wt%) | sintering additive | weight percent of sintering additive (wt%) | weight percent of MgO (wt%) | sintering conditions (°C×Hrs) | relative density (%) | thermal comductivity (W/m·k) | electrical insulation at 700 °C (MΩ) |
|---|---|---|---|---|---|---|---|---|
| 15 | 97.00 | Y₂O₃ | 3.000 | - | 1800×2 | 99.5 | 160 | 5 |
| 16 | 94.00 | Y₂O₃ | 6.000 | - | 1750×5 | 99.0 | 155 | 3 |
| 17 | 95.00 | CaO | 5.000 | - | 1850×5 | 99.0 | 120 | 45 |
| 18 | 92.00 | SrO | 8.000 | - | 1750×2 | 99.5 | 105 | 25 |
| 19 | 97.00 | Y₂O₃ | 2.995 | 0.005 | 1750×2 | 99.5 | 155 | 40 |
| 20 | 97.00 | SrO | 2.998 | 0.002 | 1800×5 | 99.5 | 130 | 30 |
| 21 | 86.00 | Y₂O₃ | 12.000 | 2.000 | 1700×2 | 98.0 | 75 | 1500 |
| 22 | 83.00 | SrO | 15.000 | 2.000 | 1700×2 | 99.0 | 60 | 2000 |
| 23 | 80.00 | Eu₂O₃ | 18.000 | 2.000 | 1650×2 | 97.5 | 45 | 600 |
| 24 | 88.00 | Y₂O₃ | 5.000 | 7.000 | 1750×2 | 93.0 | 50 | 1050 |
| 25 | 85.00 | Y₂O₃ | 5.000 | 10.000 | 1750×2 | 90.0 | 35 | 2000 |
| 26 | 88.00 | SrO | 4.000 | 8.000 | 1650×2 | 92.0 | 35 | 4500 |
| 27 | 89.50 | CaO | 4.000 | 6.500 | 1700×2 | 91.0 | 45 | 6500 |

In Tables 1 and 2, each relative density of the test pieces (Nos. 1 ∼ 27) was obtained as a ratio of apparent density/theoretical density by using Archimedean method.

A device as shown in Fig. 1 was used to measure each electrical insulation of the test pieces (Nos. 1 ∼ 27) at 700 °C. The device has brass-made electrodes 100, 200, a coil heater 300 and a 500-volt digital resistance meter 400. Regarding to measurement of thermal conductivity, a laser flash method was used. Each amount of magnesia (MgO) and the sintering additive was measured on the basis of fluorescent-sensitive X-ray detection.

Among the test pieces (Nos. 1 ∼ 27), Nos. 1 ∼ 2 are substantially acceptable as a spark plug insulator, considering that the spark plug insulator needs a thermal conductivity of more than 76 W/m·k from a heat-dissipating viewpoint and an electrical insulation of more than 50 MΩ at 700 °C from a treeing-preventing viewpoint, while requiring a relative density of more than 95 % in curbing growth of dendritic crystal treeing.

It was found that test piece Nos. 3 ∼ 14 are better-suited for a spark plug insulator from the point of their sintering properties, relative density, thermal conductivity and electrical insulation.

The comparative test piece Nos. 15 ∼ 18 contain no magnesia (MgO) so that each of their electrical insulation is less than 50 MΩ at 700 °C. The comparative test piece Nos. 21 ∼ 23 contain the sintering additive exceeding 10 wt% so that each of their thermal conductivity is less than 75 W/m·k. The comparative test piece Nos. 24 ∼ 27 contain magnesia (MgO) of more than 5 wt% so that each of their relative density is less than 95 %.

A spark plug insulator was made in accordance with the test piece Nos. 1 ∼ 14. In an axial bore of the insulator, a center electrode, a resistor and a terminal electrode were placed through a conductive glass sealant. Then, the insulator was placed within a metallic shell to form a spark plug which was found to be capable of avoiding Joule's heat generation caused from corona discharge creeping over the surface of the insulator so as to prevent growth of dendritic crystals treeing over the surface of the insulator upon applying high voltage, thus maintaining both heat-resistant and anti-fouling properties.

It is noted that the nitride-based ceramic categorically includes Sialon (Trademark) and aluminum oxinite (AlON).

Sintering additives may be selected in an appropriate combination from yttrium oxide (Y₂O₃), calcium oxide (CaO), barium oxide (BaO), strontium oxide (SrO), scandium oxide (SC₂O₃), europium oxide (Eu₂O₃) and lanthanum oxide (La₂O₃), as long as the amount of the combination remains up to 10 wt%.

It is further noted that the sintering additive may be an oxidized compound of a metal selected from the group consisting of neodymium (Nd), dysprosium (Dy) and cerium (Ce).

It is also appreciated that the sintering additive may be a metallic compound selected from the group consisting of chloride, hydroxide, fluoride, carbide, sulfide, carbonate, nitrate, acetate or phosphate.

## Claims

1. A sintered ceramic body obtainable by sintering a mixture comprising a nitride- or oxinite-based ceramic powder having an average grain size of 1.5 µm and an oxygen- laden rate of less than 2 weight percent and magnesia (MgO) in an amount of 0.035 wt % to 5.0 wt %, excluding 0.035 wt %, based upon the weight of the mixture.

2. A sintered ceramic body according to claim 1 wherein the mixture comprises magnesia (MgO) in an amount of 0.05 wt % to 5.0 wt %, based upon the weight of the mixture.

3. A sintered ceramic body according to claim 1 or 2 wherein the mixture also comprises up to 10 wt %, based on the weight of the mixture, of a sintering additive which is at least one compound of an alkaline earth metal or rare-earth metal, the amount of the sintering additive being calculated on the basis of the akaline earth metal oxide or rare-earth metal oxide.

4. A sintered ceramic body according to claim 3 wherein the sintering additive is selected from yttrium oxide (Y₂O₃), calcium oxide (CaO), barium oxide (BaO), strontium oxide (SrO), scandium oxide (Sc₂O₃), europium oxide (Eu₂O₃) and lanthanum oxide (La₂O₃).

5. A sintered ceramic body according to any one of the preceding claims, in the form of a spark plug insulator.

6. A method of preparing a ceramic body as claimed in any one of the preceding claims which comprises;
preparing a mixture of nitride-based ceramic powder, magnesia and, as sintering additive, at least one compound of an alkaline earth metal or rare-earth metal, the amount of magnesia being from 0.035 wt % to 5.0 wt %, excluding 0.035 wt %, and the amount of the sintering additive being up to 10 wt % calculated as alkaline earth metal oxide or rare-earth metal oxide, both based on the total weight of the mixture,
calcining the mixture at 500°C for about 2 hours;
pressing the mixture at 99.64 MPa (1.0 ton/cm²) by means of a cold isostatic press to form a compact body; and
sintering the compact body in a nitrogen atmosphere at a temperature of from 1750°C to 1900°C for 2 to 5 hours.

## Patentansprüche

1. Sinterkeramikkörper, der durch Sintern einer Mischung erhalten werden kann, die, basierend auf dem Gewicht der Mischung, ein Keramikpulver auf Nitridbasis oder Oxinitbasis mit einer durchschnittlichen Korngröße von 1,5 µm und einem Sauerstoffgehalt von weniger als 2 Gew.-% sowie Magnesiumoxid (MgO) in einem Betrag von 0,035 Gew.-% bis 5,0 Gew.-%, ausgenommen 0,035 Gew.-%, umfaßt.

2. Sinterkeramikkörper nach Anspruch 1, bei dem die Mischung basierend auf dem Gewicht der Mischung Magnesiumoxid (MgO) in einem Betrag von 0,05 Gew.-% bis 5,0 Gew.-% umfaßt.

3. Sinterkeramikkörper nach Anspruch 1 oder 2, bei dem die Mischung basierend auf dem Gewicht der Mischung auch bis zu 10 Gew.-% eines Sinterzusatzes umfaßt, der mindestens eine Verbindung eines Erdalkalimetalls oder eines seltenen Erdmetalls ist, wobei der Betrag des Sinterzusatzes auf der Basis des Erdalkalimetalloxids oder des seltenen Erdmetalloxids berechnet wird.

4. Sinterkeramikkörper nach Anspruch 3, bei dem der Sinterzusatz aus der Gruppe von Yttriumoxid (Y₂O₃), Kalziumoxid (CaO), Bariumoxid (BaO), Strontiumoxid (SrO), Scandiumoxid (Sc₂O₃), Europiumoxid (Eu₂O₃) und Lanthanoxid (La₂O₃) ausgewählt wird.

5. Sinterkeramikkörper nach einem der vorhergehenden Ansprüche, in der Form eines Zündkerzenisolators.

6. Verfahren zum Herstellen eines Keramikkörpers, wie er in einem der vorhergehenden Ansprüche beansprucht wird, das folgende Schritte umfaßt:
Herstellen einer Mischung aus Keramikpulver auf Nitridbasis, Magnesiumoxid und als Sinterzusatz mindestens eine Verbindung eines Erdalkalimetalls oder eines seltenen Erdmetalls, wobei der Betrag an Magnesiumoxid zwischen 0,035 Gew.-% und 5,0 Gew.-%, ausgenommen 0,035 Gew.-%, liegt, und der Betrag des Sinterzusatzes bis zu 10 Gew.-% beträgt und als Erdalkalimetalloxid oder seltenes Erdmetalloxid, beide basierend auf dem Gesamtgewicht der Mischung, berechnet wird,
Kalzinieren der Mischung bei 500°C für etwa 2 Stunden, Pressen der Mischung bei 99,64 MPa (1,0 ton/cm²) mit Hilfe einer isostatischen Kaltpresse, um einen kompakten Körper zu formen, und
Sintern des kompakten Körpers in einer Stickstoffatmosphäre bei einer Temperatur von 1750°C bis 1900°C über einen Zeitraum von 2 bis 5 Stunden.

## Revendications

1. Corps en céramique frittée pouvant être obtenu par frittage d'un mélange comportant une poudre de céramique à base de nitrure ou d'oxyde ayant une dimension moyenne de grain de 1,5 µm et un taux de charge d'oxygène inférieur à 2 % en poids et de la magnésie (MgO) selon une quantité allant de 0,035 % en poids à 5,0 % en poids, à l'exclusion de 0,035 % en poids, sur la base du poids du mélange.

2. Corps en céramique frittée selon la revendication 1, dans lequel le mélange comporte de la magnésie (MgO) selon une quantité allant de 0,05 % en poids à 5,0 % en poids, sur la base du poids du mélange.

3. Corps en céramique frittée selon la revendication 1 ou 2, dans lequel le mélange comporte aussi jusqu'à 10 % en poids, sur la base du poids du mélange, d'un additif de frittage qui est au moins une composition d'un métal alcalino-terreux ou d'un métal des terres rares, la quantité d'additif de frittage étant calculée sur la base de l'oxyde de métal alcalino-terreux ou d'oxyde de métal des terres rares.

4. Corps en céramique frittée selon la revendication 3, dans lequel l'additif de frittage est choisi parmi l'oxyde d'yttrium (Y₂O₃), l'oxyde de calcium (CaO), l'oxyde de baryum (BaO), l'oxyde de strontium (SrO), l'oxyde de scandium (Sc₂O₃), l'oxyde d'europium (Eu₂O₃) et l'oxyde de lanthane (La₂O₃).

5. Corps en céramique frittée selon l'une quelconque des revendications précédentes, ayant la forme d'un isolant de bougie d'allumage.

6. Procédé de préparation d'un corps en céramique selon l'une quelconque des revendications précédentes, qui consiste à :
préparer un mélange constitué de poudre de céramique à base de nitrure, de magnésie et, en tant qu'additif de frittage, d'au moins une composition d'un métal alcalino-terreux ou d'un métal des terres rares, la quantité de magnésie étant de 0,035 % en poids à 5,0 % en poids, à l'exclusion de 0,035 % en poids, et la quantité d'additif de frittage allant jusqu'à 10 % en poids calculée en tant qu'oxyde de métal alcalino-terreux ou d'oxyde de métal des terres rares, tous deux sur la base du poids total du mélange,
calciner le mélange à 500° C pendant environ 2 heures,
comprimer le mélange sous 99,64 MPa (1,0 ton/cm²) par l'intermédiaire d'une presse isostatique à froid pour former un corps compact, et
fritter le corps compact dans une atmosphère d'azote à une température de 1 750° C à 1 900° C pendant 2 à 5 heures.
